# EUROPEAN PATENT SPECIFICATION

(11) **EP 0 570 231 B1**
(45) Date of publication and mention of the grant of the patent: **15.01.1997**
(21) Application number: 93303727.7
(22) Date of filing: 14.05.1993
(51) Int. Cl.: H02K 3/34, H02K 3/32, H02K 3/52, H02K 29/00

(54) **Stator unit of flat motor**
Ständereinheit eines Flachmotors
Ensemble de stator d'un moteur plat

(30) Priority: 15.05.1992 JP 148752/92
(43) Date of publication of application: 18.11.1993
(73) Proprietor: MINEBEA CO.,LTD., Kitasaku-gun Nagano (JP)
(72) Inventor: Suzuki, Yuzuru, Hamana-gun, Shizuoka (JP); Fujitani, Sakae, Hamamatsu-shi, Shizuoka (JP); Inagaki, Masaaki, Iwata-gun, shizuoka (JP)
(74) Representative: Jackson, Peter Arthur

(56) References cited:
- EP-A- 0 015 244
- DE-A- 2 021 916
- US-A- 3 122 667
- US-A- 3 339 097
- US-A- 4 554 491
- US-A- 4 910 420
- PATENT ABSTRACTS OF JAPAN vol. 8, no. 49 (E-230)(1486) 6 March 1984 ; & JP-A-58 201 553
- PATENT ABSTRACTS OF JAPAN vol. 7, no. 99 (E-172)(1244) 27 April 1983 ; & JP-A-28 22 553

## Description

The present invention relates to a flat motor stator, which provides especially simple construction of armature coil insulation, and furthermore relates to the very easy assembly of the flat motor stator.

The newest tape recorders, photocopiers and other electronic apparatus follow a trend to downsizing and lighter height for requirements from user and improvement of capacity and requirements.

This is accompanied by motors that are being used in electronic apparatus becoming thinner and smaller in size.

One of problems, when the motor is made smaller or flatter, is as to the armature coil insulation. Namely, while on the way of this winding that the armature coil is winded on the magnetic pole stator, the insulatin membrane coating a conducting wire of the armature coil is damaged when it contacts the magnetic pole surface strongly.

Also in order to prevent the insulation space between armature coil and magnetic pole from being torn, a bobbin is provided for the pole But since the motor is made smaller and flatter, this bobbin can not be fitted on the magnetic pole. Then thick synthetic resin membranes are adhered to the whole stator instead of the bobbin. Or sometimes tapes are affixed to the magnetic poles. As a result, there is not enough space to wind the armature coil winding on the magnetic poles, so that the coil can not have many windings

As other problem, there is a treatment of the armature coil end. Normally, in order to prevent the armature coil winding on the magnetic pole from losening, the armature coil has been temporarily fastened by application or adhension of varnish or sealing wax etc. on the wound armature coil. Consequently, in a case where the armature coil's terminal is entwined with something during assembling the moter and is received same pulling force, under those circumstances, it sometimes happens that the end of the wire will be detached from the armature coil, even varnish and sealing wax are peeled off, so that the armature coil wound with difficulty is rewinded during the manufacture of the motor.

For settling the above-mentioned disadvantage, in a process of assembling a small motor, it is an object of the present invention to provide a stator unit with a flat motor having the wound coil which does not loosen.

Another object of the present invention is to provide a stator unit with a flat motor which has a sufficient insulation gap between the armature coil and each of magnetic pole when the wound coil is finished.

Still another object of the present invention is to provide a stator unit With a flat motor which obtains ampere turn of the armature coil as much as possible.

Moreover, last another object of the present invention is to provide a stator unit with a flat motor which makes it easier for the assembly due to forming flatter forms in comparison with the conventional one.

US-A-3122667 discloses a stator unit for a motor, the unit having an armature provided by coils wound on a plurality of magnetic pole pieces projecting radially from a ring-shaped yoke of a magnetized material, the yoke and pole pieces forming a stator core and being formed of a stack of laminations held together by insulating material which covers the side faces of the pole pieces while leaving the axially facing faces of the pole pieces exposed, and, according to the present invention, such a stator unit is characterised in that the stator unit is for a flat motor; in that the pole pieces extend radially outwardly from the yoke in a circular array; in that the laminations are insert moulded within the insulating material; and in that the moulded insulating material extends axially beyond both axially facing end faces of the pole pieces.

In the accompanying drawings:-
Fig. 1 is a cross-sectional view of a flat motor;
Fig. 2 is a front view of a stator coil;
Fig. 3 is a fragmentary front view of the magnetic pole made of silicon-steel sheet and part of the yoke;
Fig. 4 is a cross-sectional view of Fig. 2 cut along the Y-Y line in Fig. 2;
Fig. 5 is an enlarged cross-sectional view of the part circled with a chain line of Fig. 4;
Fig. 6 is a bottom view of a stator core;
Fig. 7 is a fragmentary perspective view showing a single magnetic pole of a stator core;
Fig. 8 is a cross-sectional view of a section cut along the A-A line of Fig. 7;
Fig. 9 is a partially cross-sectional view according to another embodiment of the present invention.

An embodiment of the present invention will hereinafter be described in details with drawings.

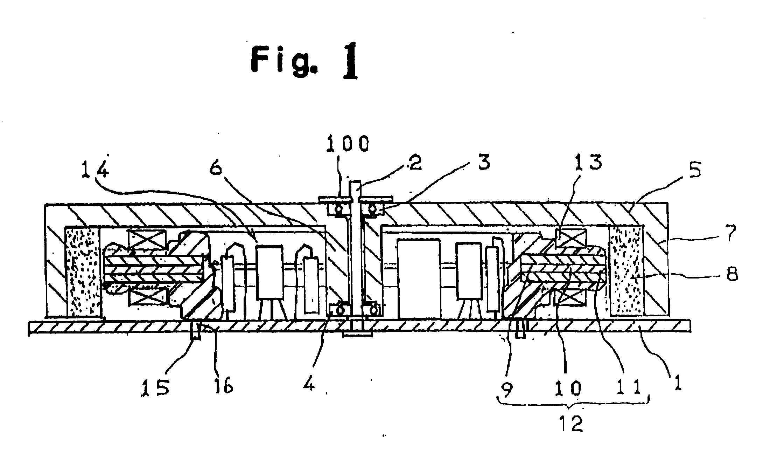

Fig. 1 is a crsos-sectional view of an auto-rotor type flat motor relating to the present invention. In Fig. 1, 1 denotes a motor base plate made from a printed circuit board. In the centre of the motor base plate, axle 2 is installed. In the axle 2, an auto-rotor 5 rotates freely on the axle through bearings 3 and 4. Auto-rotor 5 is shaped like turning a thin flat circular platter over and in its centre bearing 6 is installed. On the inside of the bearing 6, previously mentioned bearings 3 and 4 are arranged. On the inside of the outer wall 7 of auto-rotor 5, a ring shaped magnet 8 made of ferrite is installed. On the inside of auto-rotor 5, the ring-shaped yoke 9 is arranged inside, and stator core 12 equipped with a plurality of magnetic pole pieces 10 having the multiple poles 11 protuding circularly from the outside wall is arranged. The stator core 12 is made up from yoke 9, magnetic pole piece 10 and pole with 3 layers of silicon-steel sheets. The armature coil 13 is wound around the magnetic pole pieces 10. The construction of stator core 12, which is included in the armature coil 13 will be discussed later. In the free space between bearing 6 and yoke 9 of stator core 12, electronic equipment 14 needed to drive the motor is arranged. Needless to say, aformentioned stator core 12 may be made with ferrite, however composition with silicon-steel sheet is also suitable.

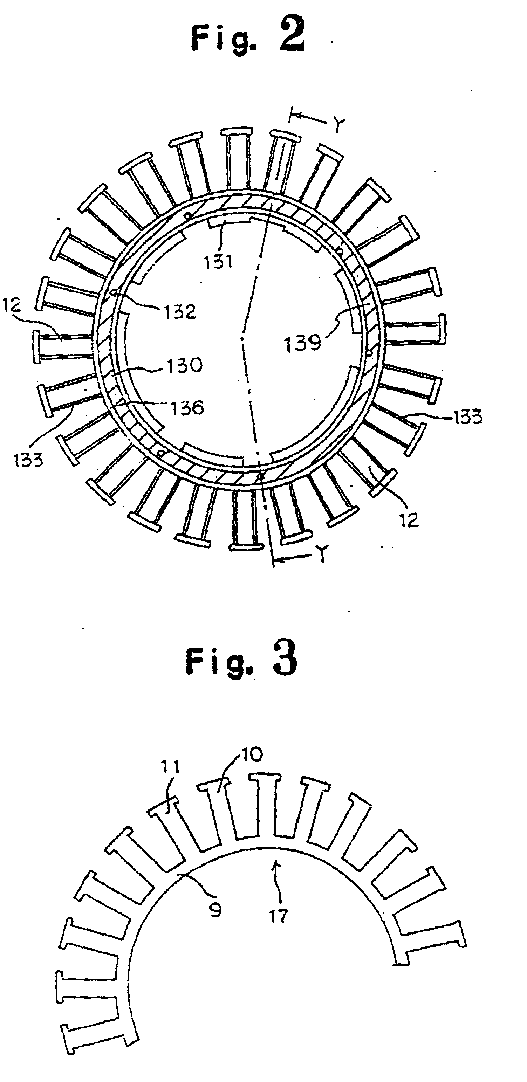

Fig.2 shows a front view of stator core 12 not yet wound with a flat motor coil relating to the present invention. The stator core 12 is made up from yoke 9, magnetic pole pieces 10 and poles 11 laminated with 3 layers of silicon-steel sheet 17 as a core shown in Fig.3. With using the synthetic resin insert-mould-process, yoke 9 is covered with the inside frame 130 made of synthetic resin. Both the side surfaces of magnetic pole piece 10 are adhered at the same time with thin layer insulation 133 by the insert-mould-process.

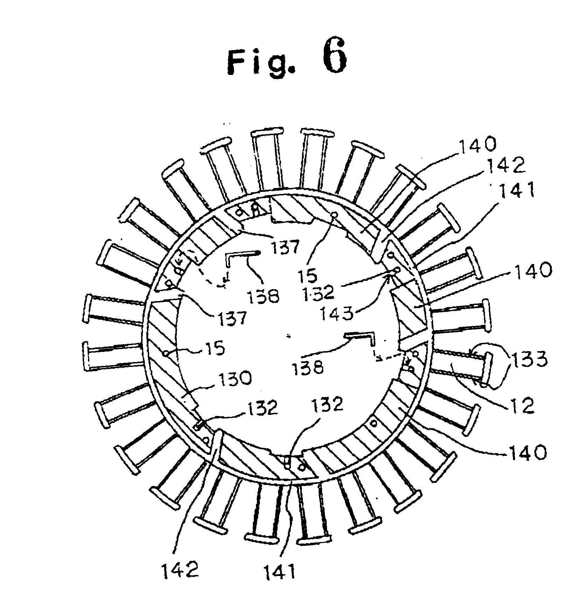

The flat outside support 139 (in Fig. 2 the slanted section) on the surface of inner frame 130 forms at the same time the outside edge 136. This outside edge 136 connects one magnetic pole piece with the next magnetic pole piece as a lead wire. On the inside surface of inner frame 130, as shown in Fig.6, the flat inner support 140 is provided (slanted area in Fig. 6).

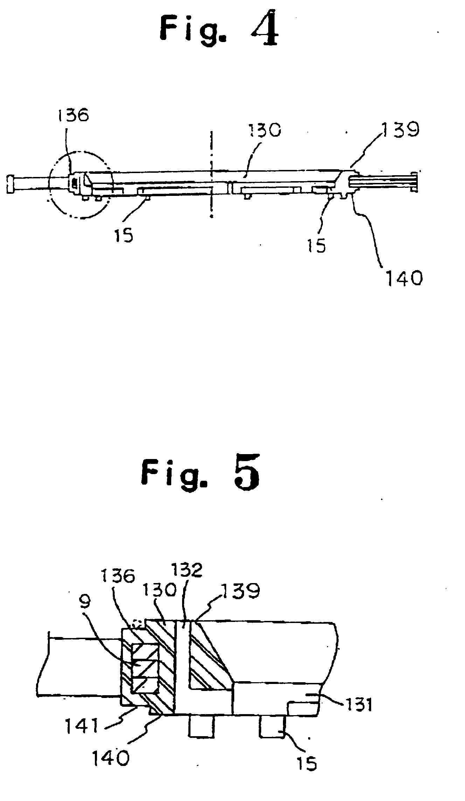

Furthermore, as shown in Figs. 2, 4, 5 and 7, fins 131 provided on the inside of frame 130 are arranged toward the center direction. The inner frame 130 is equipped with small hole 132, penetrating from its upper to its lower surface, and the L-shaped pins 138 as the terminals of armature coil 13 are formed as they are inlaid. 15 denotes a boss protruding on the flat inside support 140 of inner frame 130, which are for determining the position for previously mentioned motor base plate 1. Furthermore, on the outer ledge of flat inside support 140, the outer ledge 141 for the same purpose of the outer edge 136 are formed. At the same time, grooves 142 are formed toward the surface of inner periphery from the surface of outer periphery of inner frame 130. The bottom of these grooves 142 matches equally deep ones on the surface of flat inner holder 140. These grooves 142 provide a path for the terminals of the armature coil 13. The outlets of the small holes 132 on the inner surface of stator core 12 form the terminal inserts 143 which are in laid into the L-shaped pins 138.

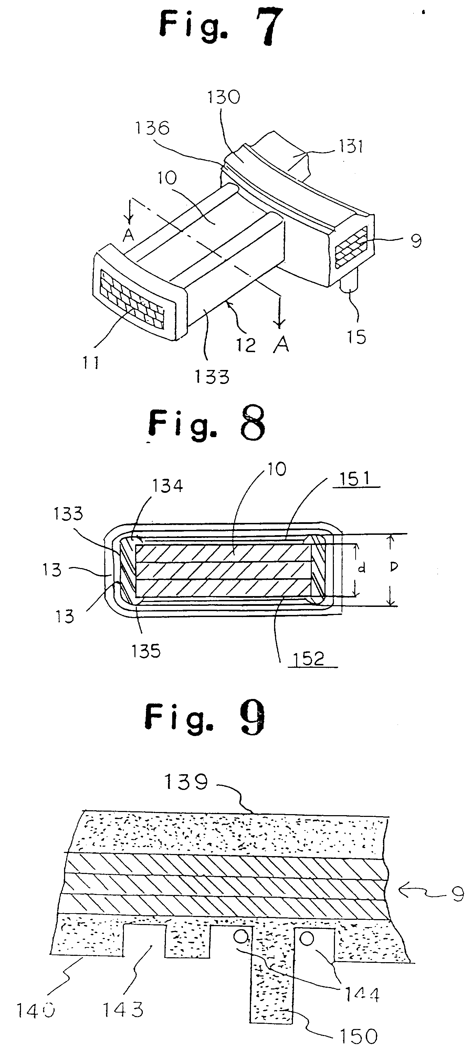

As shown in Figs. 7 and 8, thin insulation layer 133 is formed at the time of the insert-mould process on both sides of magnetic pole piece 10. The vertical hight D of the layer 133 is greater than the thickness of magnetic pole piece 10 by, for example, 0.2 mm. When armature coil 13 is wound onto magnetic pole piece 10, contact between the corners of magnetic pole pieces 10 and the lead wire of armature coil 13 is prevented. Also, it is possible that the upper and lower edges of thin layer insulation 133 are wound in and then upper edge 134 and lower edge 135 are formed. Normally, the upper and lower parts of the surface of magnetic pole piece 10 stand out, and it is available that this part is covered with an insulation membrane 151 and 152 of a thickness of at least 0.1 mm by electro-plating. That thickness protruding from the inner and outer surface of magnetic pole piece 10 is sufficiently small from the height of part (D-d)/2.

Armature coil 13 is wound on every magnetic pole piece 10. In the embodiment, for example, four poles each are successively wound. Begining and end of the coils are driven through previously mentioned small holes 132 each of which is connected by coiling around pins 138. Under these circumstances, the outer edge 136 of the lower part of previously mentioned inner frame 130 is a path of connected leads between adjoining armature coils 13, and also grooves 137 of inner frame 130 as shown in Fig.6 is a path in which the beginning and end of coils are wired to pins 138.

Then armature coils 13 at the end of the winding process are applied for preventing loosening of the winding varnish, and since the coil wire's lead wire is routed on the lower part of inner frame 130 and joins the end of the coil wire through the groove to pin 138, very durable armature coils can be obtained.

As shown in Fig.1, small holes 16 are provided to insert boss 15 (for positioning and hooking of stator core 12) in base plate 1. These small holes 16 are provided for positioning and installation of stator core 12. During flat motor assembly, after ending of the armature coil winding 13, the boss 15 of stator core 12 is inserted in the small holes 16 of motor base plate 1 combined with electronic parts. Possibly after glueing or melting the face of boss 15, stator core 12 adhers to base plate 1 and installation of electrical wiring, which the tip of armature coil is installed to motor base plate 1 and the terminal is connected, is carried out. Then the axle 6 of outer rotor 5 is inserted into the bearings 3, and with the fitting of C-ring 100 (Fig.1) on the top of axle 2, the assembly of the motor is completed. In the above embodiment, the bosses 15 are located on top of the flat inside support of the inner surface of stator core 12, however it is also possible that as shown in Fig.9, on the flat inner surface support 140, a groove 144 having a little wide groove connected to the outer surface from the inner surface of stator core 12 is formed, and an elongate boss 150 is installed inside of the groove 144 by a groove 144 and boss 150 is utilized for positioning as well as for hooking of armature coil terminal 145.

As explained in detail, insulation is installed on the outer surface of the magnetic pole pieces, and the magnetic pole piece is thicker than the electrode. Because of this, when the armature coil of the magnetic pole piece is wound, the armature coil is constructed such that the wire does not touch the corners of the magnetic pole piece. Accordingly, the wire is prevented from touching and the magnetic pole piece thin layer insulation does not break down and the wire is also not directly in contact with the inner or outer surface. Therefore, although the stator core is sufficiently thin, it can be ensured that there is sufficient insulation space between the magnetic pole piece and the armature coil. Furthermore the beginning and end of the armature coil winding are coiled around pins, so that the armature coil will not loosen when longitudinal pulling force occurs. Consequently the motor assembly becomes much simplier.

## Claims

1. A stator unit for a motor, the unit having an armature provided by coils (13) wound on a plurality of magnetic pole pieces (10) projecting radially from a ring-shaped yoke (9) of a magnetized material, the yoke and pole pieces forming a stator core (12) and being formed of a stack of laminations (17) held together by insulating material (133) which covers the side faces of the pole pieces while leaving the axially facing faces of the pole pieces exposed; characterised in that the stator unit is for a flat motor; in that the pole pieces (10) extend radially outwardly from the yoke (9) in a circular array; in that the laminations (17) are insert moulded within the insulating material (133); and in that the moulded insulating material extends axially beyond both axially facing end faces of the pole pieces (10).

2. A unit according to claim 1, wherein the insulating material (134,135) overlaps the edges of the axially facing faces of the pole pieces (10).

3. A unit according to claim 1 or claim 2, wherein the axially facing faces of the pole pieces (10) are formed by an insulating layer (151,152), which has a thickness (D-d)/2 ≤ 0.1mm.

4. A unit according to any one of the preceding claims, wherein a radially inner part of the stator core (12) is provided with a boss (15) for positioning and installation of the stator core.

5. A unit according to any one of the preceding claims, wherein a terminal (138) for a coil end is provided within the stator core (12).

## Patentansprüche

1. Ständereinheit für einen Motor, die einen Anker aufweist, der durch Wicklungen (13) gebildet ist, die um mehrere Magnetpolstücke (10) herumgewickelt sind, die radial von einem ringförmigen Joch (9) aus magnetisiertem Material abstehen, wobei das Joch und die Polstücke einen Ständerkern (12) bilden und aus einem Stapel aus Blechen (17) gebildet sind, die durch Isolationsmaterial (133) zusammengehalten werden, das die Seitenflächen der Polstücke abdeckt, aber die axial gekehrten Flächen der Polstücke frei läßt, dadurch gekennzeichnet, daß die Ständereinheit für einen Flachmotor vorgesehen ist; daß sich die Polstücke (10) radial nach außen vom Joch (9) in einer kreisförmigen Anordnung erstrecken; daß die Bleche (17) in dem Isolationsmaterial (133) einsatzgeformt sind; und daß sich das geformte Isolationsmaterial axial über beide axial gekehrten Endflächen der Polstücke (10) hinaus erstreckt.

2. Einheit nach Anspruch 1, bei der das Isolationsmaterial (124, 134) die Ränder der axial gekehrten Flächen der Polstücke (10) überlappt.

3. Einheit nach Anspruch 1 oder Anspruch 2, bei der die axial gekehrten Flächen der Polstücke (10) durch eine Isolationsschicht (151, 152) gebildet sind, die eine Dicke von (D-d)/2 ≤ 0,1 mm hat.

4. Einheit nach einem der vorstehenden Ansprüche, bei der ein radial innerer Teil des Ständerkerns (12) mit einem Vorsprung (15) zur Positionierung und Installation des Ständerkerns versehen ist.

5. Einheit nach einem der vorstehenden Ansprüche, bei der ein Anschluß (138) für ein Wicklungsende in dem Ständerkern (12) vorgesehen ist.

## Revendications

1. Ensemble stator pour un moteur, l'ensemble comportant une armature pourvue de bobines (13) bobinées sur une pluralité de pièces polaires magnétiques (10) en saillie radialement depuis une culasse (9) de forme annulaire faite d'une matière aimantée, la culasse et les pièces polaires formant un noyau de stator (12) et ayant la forme d'un empilement de tôles magnétiques (17) tenues ensemble par une matière isolante (133) qui couvre les faces latérales des pièces polaires, tout en laissant à nu les faces orientées axialement des pièces polaires ; caractérisé en ce que l'ensemble stator est utilisé pour un moteur plat ; en ce que les pièces polaires (10) s'étendent radialement vers l'extérieur depuis la culasse (9) en une rangée circulaire ; en ce que les tôles magnétiques (17) sont insérées par moulage à l'intérieur de la matière isolante (133) ; et en ce que la matière isolante moulée s'étend axialement au-delà des deux faces d'extrémité orientées axialement des pièces polaires (10).

2. Ensemble selon la revendication 1, dans lequel la matière isolante (134, 135) recouvre les bords des faces orientées axialement des pièces polaires (10).

3. Ensemble selon la revendication 1 ou la revendication 2, dans lequel les faces orientées axialement des pièces polaires (10) sont formées par une couche isolante (151, 152), qui a une épaisseur (D - d)/2 ≤ 0,1 mm.

4. Ensemble selon l'une quelconque des revendications précédentes , dans lequel une partie radialement vers l'intérieur du noyau de stator (12) est pourvue d'un bossage (15) pour positionner et implanter le noyau de stator.

5. Ensemble selon l'une quelconque des revendications précédentes, dans lequel une borne (138) pour une extrémité de bobine est disposée à l'intérieur du noyau de stator (12).
